# EUROPEAN PATENT SPECIFICATION

(11) **EP 1 024 060 B1**
(45) Date of publication and mention of the grant of the patent: **21.11.2001**
(21) Application number: 99124005.2
(22) Date of filing: 08.12.1999
(51) Int. Cl.: B60R 21/16, D03D 1/02

(54) **Method for producing an airbag and airbag**
Verfahren zur Herstellung eines Airbags und Airbag
Procédé de fabrication d'un coussin gonflable et coussin gonflable

(30) Priority: 28.01.1999 DE 19903361
(43) Date of publication of application: 02.08.2000
(73) Proprietor: BREED AUTOMOTIVE TECHNOLOGY, INC., Lakeland, FL 33807-3050 (US)
(72) Inventor: Ross, Hubert, 61440 Oberursel (DE); Saeuberlich, Frank, 65207 Wiesbaden (DE)
(74) Representative: Müller-Boré & Partner Patentanwälte

(56) References cited:
- WO-A-94/04734
- US-A- 5 249 824
- US-A- 5 683 109
- PATENT ABSTRACTS OF JAPAN vol. 1997, no. 06, 30 June 1997 (1997-06-30) & JP 09 048307 A (DENSO CORP), 18 February 1997 (1997-02-18)

## Description

The invention relates to a method for producing an airbag for an airbag module and to an airbag for an airbag module.

An inflated airbag of an airbag module is generally characterized by three dimensions, namely the length, width and depth. At the same time, in particular, the depth of the airbag has a great influence on the ability of the airbag to protect a vehicle occupant in the event of an accident. It is possible, by setting the airbag depth, to adapt the airbag optimally to special vehicles or installation positions, in order to achieve optimum occupant protection. In known airbags and, in particular, in airbags which have only two-dimensional seams, that is to say seams made in one flat plane, it was possible only to a limited extent to adapt the airbag to different instances of use, since only a restricted number of different shapes or designs of an airbag could be implemented. In particular, changes in the airbag depth were merely complicated to carry out and correspondingly expensive. It was therefore often not possible also to achieve optimum protection for a vehicle occupant. JP 9 048 307A discloses an airbag with a front part, a rear part and an inner bag.

The object of the invention is to provide an improved method for producing an airbag, which makes it possible to manufacture cost-effectively an airbag, the shape of which can easily be varied. The object of the invention is, furthermore, to provide an airbag which affords improved occupant protection and better possibilities for adaption to different instances of use and which is cost-effective to produce.

The object is achieved by means of a method having the features specified in claim 1 and by means of an airbag having the features specified in claim 7.

In the method according to the invention for producing an airbag for an airbag module, at least two back parts and a front part are used to form the airbag. The front part forms the front side of the airbag, said front side facing a vehicle occupant, and the back parts form the rear side of the airbag, said rear side facing the instrument panel, for example where a front airbag is concerned. At the same time, the back parts each have a first and a second portion, the two first portions of the back parts jointly or together corresponding to the design of the front part in terms of size and shape or contour. This means that it is possible to lay the two first portions of the back parts one on the other in such a way that they can be laid congruently onto the front part. The second portions of the two back parts have an identical design, so that they can be laid congruently one on the other. After the second portions of the back parts have been laid flat and congruently one on the other, these second portions are connected to one another in the region of their free circumference, that is to say their outer free edges which are not in contact with the first portion of the back part. In this case, however, the connection remains interrupted in one portion, in order to form a gas inlet orifice, to which a gas generator or a gas supply device can subsequently be attached. Preferably, this interruption for the gas inlet orifice is arranged in the middle of the connecting seam, but may also be arranged asymmetrically, that is to say displaced laterally along the connecting seam. After the second portions of the back parts have been connected, the first portions of the back parts are drawn apart or swung in opposite directions, so that they form a flat plane surface which, as explained above, corresponds in size and shape to the first front part. The back parts, spread out in this way, are then laid flat and congruently onto the front part, so that the first portions of the back parts and the front part lie one above the other in parallel. Subsequently, the first portions of the back parts are connected to the front part along their joint outer circumference. In this case, the connection is made along the entire outer circumference of the front part and in the region of the free edges of the first portion of the back part, that is to say the regions which do not face the second portions of the back parts. As a result of this connection, a closed airbag is formed, with a gas inlet orifice in the region of the second portions of the back parts. In addition, outflow orifices may also be provided in the back parts, said outflow orifices preferably being closed by means of valves which allow the gas to flow out only after the airbag has been filled. After the back parts have been connected to the front part, the airbag is turned inside out, that is to say "wrong side out". This ensures that that side of the airbag which was directed outward during the connecting operation forms the inside of the airbag in the finished state, the result of this being that the seams are arranged inside the airbag and the risk of a vehicle occupant being injured by the seams is minimized. The method according to the invention affords the advantage that all the connecting operations can be carried out two-dimensionally, that is to say when the parts to be connected are in the state in which they are spread out flat and in which the regions to be connected are in each case arranged in one flat plane. This is conducive to automating the connecting operation, since a device for connecting the parts merely has to run down the connecting contour in one plane. Fewer complicated manual handling operations are necessary in order to lay in place correctly airbag parts possibly located on the inside or three-dimensional seam runs of complicated design. Furthermore, this method for producing an airbag affords the advantage that the shape of the airbag can be varied very easily, in particular in the depth of the airbag, that is to say the direction in which the airbag extends toward a vehicle occupant when it is being filled, with the result that it becomes possible for the airbag to be adapted optimally to different instances of use and vehicles. In order to provide a deeper airbag, it is merely necessary, here, for the second portion of the back parts to be made larger. Moreover, the airbag may be designed symmetrically or asymmetrically in any desired way, depending on the instance of use, without the basic makeup comprising two back parts and a front part having to be changed. Thus, the front part may have, for example, a symmetric oval shape or, for example, even an asymmetric essentially triangular shape, in each case the first portions of the back parts being adapted correspondingly to the shape of the front part, so that the front part and the first portions of the two back parts continue to fit congruently one on the other. Furthermore, the two first portions of the back parts may also be designed in a different size, so that the interruption in the connection of the second portions of the back parts, said interruption defining the gas inlet orifice, is arranged outside the middle of the airbag. The protective properties of the airbag can thereby be adapted optimally to different vehicle types and installation positions.

Advantageously, the method additionally comprises the following steps for producing an inner bag:
formation of a third portion on each back part prior to the connection of the back parts, which third portion in each case, starting from the circumferential region of the second portion in which the gas inlet orifice is formed, extends parallel to the first and second portion, the two third portions of the back parts having at least the same outer contour and at least one overflow orifice being provided in at least one of the third portions,
arrangement of the back parts during the connection of the second portions, in such a way that the third portions lie on opposite outer surfaces of the second portions,
drawing of the third portions out of the airbag through the gas inlet orifice after the airbag has been turned inside out,
laying of the two third portions of the back parts congruently one on the other and connection of the third portions along their outer free edges, and
pushing of the connected third portions of the back parts into the interior of the airbag, in order to form the inner bag.

The additional formation of an inner bag affords the advantage, during filling or inflation, that the inflow direction of the gas can be controlled in a focused manner, with the result that, in particular, a high deployment pressure or pulse in the direction of the vehicle occupant can be avoided. At the same time, the method according to the invention affords the advantage that the inner bag is very easy and cost-effective to produce, without the need for three-dimensional connecting operations, that is to say connecting operations which cannot be carried out in one plane. In the method according to the invention, all the connecting operations can be carried out two-dimensionally, that is to say a connecting device merely has to run down the connecting contour in one plane. The third portions of the back parts, which are already connected to the back parts when the latter are connected to one another and then to the front part, are two flat portions which, after the airbag has been turned inside out, that is to say "wrong side out", merely have to be drawn out of said airbag and laid flat one on the other, so as then to be connected to one another along their free edges, that is to say along the outer circumference. Subsequently, the inner bag thus formed is simply pushed into the interior of the airbag again, and the airbag is then ready to be folded together and installed.

Also preferably, the third portions of the back parts are manufactured as separate parts and are connected to the second portion of the corresponding back part prior to the connection of the second portions of the two back parts. The third portions are therefore two separate blanks, thereby making it possible to utilize the material more advantageously during cutting to size. In order to connect the third portion to the second portion, the portions are laid flat one on the other and are subsequently connected to one another along their joint edge in the region which later forms the gas inlet orifice. This connection is once again made in one plane, that is to say only a two-dimensional connecting operation is necessary. Since the third portion thus overlaps the second portion, particularly in the region of the gas inlet orifice, the third portion therefore functions at the same time as a reinforcing element and as a heat protection shield which protects the outer airbag, that is to say, here, in particular the back parts, from the excessive effect of heat when hot gas flows into the airbag. Mechanical reinforcement of the airbag is desirable in this region, since, in the region of the gas inlet orifice, the entire airbag is connected to a gas generator or a gas generator carrier, so that all the forces occurring when the airbag is being filled are introduced into the gas generator carrier via this region. Consequently, heat protection, mechanical reinforcement and an additional inner bag are formed simultaneously by virtue of the arrangement according to the invention of the third portion of the back part. At the same time, the entire airbag can still be produced very simply and cost-effectively.

The first, second and third portion of each back part are preferably produced in one piece. This dispenses with an additional connecting operation for connecting the second and third portions, with the result that the production costs can be reduced. The third portion is merely folded round along the free edge of the second portion, said free edge subsequently forming the gas inlet orifice, so that said third portion comes to lie on the second and first portions in parallel with these. The third portion therefore continues to ensure sufficient mechanical reinforcement and sufficient heat protection, since said third portion, which subsequently forms the inner bag and extends into the interior of the airbag, overlaps the second portion, particularly in the region of the gas inlet orifice.

A predetermined depth of the airbag is expediently set by adapting the length of the second portions of the back parts in the direction from the respective first portion to the region forming the gas inlet orifice. The length of the second portions of the back parts is thus varied in the depth direction, that is to say in the main deployment direction of the airbag, in order to achieve a change in the airbag depth for adaption to different instances of use. This change can be made very easily, since the remaining parts, in particular the first portions of the back parts and also the front part, do not have to be changed.

Expediently, the back parts and the front part are cut to size from a single material layer in such a way that they are connected to one another in one piece at least in part regions of their circumferences. This means that the entire airbag can be cut to size from a single material layer, and the individual parts, that is to say the back parts, the front part and, if appropriate, the third portions of the back parts, are laid flat one above the other, simply by being appropriately pleated or folded round, and are then connected to one another at their edges. There is therefore still only need for two-dimensional connecting operations, that is to say connecting operations which are carried out in one plane. However, since all the parts are manufactured in one piece, some of the necessary connecting operations may be dispensed with, thereby making production even simpler.

Preferably, the back parts and the front part of the airbag consist of a fabric and are connected to one another preferably by stitching and/or adhesive bonding and/or heat sealing. Fabrics, while having a low weight, offer a high degree of strength, and, if appropriate, the fabric may be coated for sealing off or in order to form heat protection. Fabrics of this type can easily be stitched, adhesively bonded or, particularly when they are manufactured from plastic, heat-sealed. This results in extremely firm and also leaktight connections which can be made easily and cost-effectively.

The airbag according to the invention consists at least of a front part facing a vehicle occupant and of two back parts facing away from the vehicle occupant, that is to say the back parts of the airbag face the instrument panel or a steering wheel in the case of a front airbag. At the same time, the two back parts together or jointly have a larger surface than the front part. The back parts each have a first portion which is dimensioned in such a way that the two first portions of the back parts jointly correspond to the front part in terms of shape and size. This means that, when the two first portions are laid one on the other, they form a plane surface which corresponds in size and shape to the surface of the front part. The first portions of the back parts and the front part can thus be laid congruently one on the other. The first portions of the two back parts are connected along their free edges, that is to say the circumferential regions which do not face the second portion, to the front part along the outer circumference of the latter. In this way, the first portions of the back parts and the front part form an airbag which is opened toward the region of the second portions of the back parts. When the airbag is in the deployed state, the second portions of the back parts extend essentially transversely to the front part, that is to say, in the case of a front airbag, away from the vehicle occupant toward the instrument panel or steering wheel. The second portions of the back parts are connected to one another along their outer edges, that is to say the circumferential regions which do not face the first portion. In this case, the connection of the second portions is interrupted at least in one portion, in order to form a gas inlet orifice. This interrupted portion is preferably arranged in the middle of the connecting line or connecting seam of the second portions, that is to say, advantageously, essentially in the middle with respect to a longitudinal axis of the finished airbag. In this airbag embodiment according to the invention, the depth of the airbag in the inflated state is influenced essentially by the second portions of the back parts. The depth of the airbag can thereby be varied very easily by varying the shape and size of the second portions of the back parts, in order to allow optimized adaption to different vehicles and installation locations. Moreover, an airbag of this type has the advantage that it can be manufactured very cost-effectively, since all the connecting operations can be carried out as two-dimensional connecting operations in one plane. A connecting tool or a connecting device therefore has to be moved only in one plane, that is to say in only two directions, along the connecting line.

Advantageously, an additional inner bag is provided in the airbag, said inner bag being arranged inside the airbag and having a gas inlet orifice and at least one overflow orifice which connects the interior of the inner bag to the inner space of the airbag and, in the edge region of the gas inlet orifice of the inner bag, is connected, at least in portions, to the edge region of the gas inlet orifice of the airbag. The inner bag is thus connected to the second portions of the back parts. The fastening of the entire airbag to a gas generator is likewise preferably provided in these regions, so that the inner bag serves at the same time as a reinforcement for the airbag in this region and is likewise connected directly to the gas generator or a gas generator carrier. An inner bag of this type affords the advantage that, when the airbag is being inflated, the inflowing gas, which first flows into the inner bag, can be guided or controlled in a focused manner, in order to allow a focused and directional deployment and filling of the airbag. Furthermore, the pressure, which is initially very high when the airbag is being filled with gas generated by a gas generator, acts essentially only on the inner bag which, via its connection to the gas generator or the gas generator carrier, transmits the resulting forces to these. Consequently, only a relatively low pressure and therefore lower forces act on the outer airbag, so that the risk of injury to a vehicle occupant when he comes into contact with the airbag is reduced. This is desirable particularly in instances in which the vehicle occupant is not in a predetermined position, but is too near the airbag module, in so-called "out-of-position" situations. Moreover, because of the lower forces which act on the outer airbag, the material from which this airbag is manufactured can be designed to be lighter, with the result that the risk of injury to a vehicle occupant coming into contact with the airbag can be further reduced and it can become possible for the airbag to be deployed more rapidly due to its lower mass inertia.

Expediently, the inner bag has a smaller volume than the airbag. This ensures that the inner bag does not come into contact with the outer airbag, so that the higher pressure acting in the inner bag does not act on the vehicle occupant who comes into contact with the airbag. Also preferably, the size of the inner bag is dimensioned in such a way that it takes up no more space than a cover of the airbag module when said cover is opened. A cover of this type closes off the airbag module relative to the interior of the vehicle and tears or swings open when the airbag is inflated. The space which is spanned during this time by the cover when it is swung open should expediently be larger than the space which is taken up by the inner bag. This makes it possible to ensure that the inner bag, in which a higher pressure prevails, does not constitute any greater risk of injury to a vehicle occupant than the airbag module cover which is being torn open or swung open.

When the airbag is in the deployed state, the overflow orifices are directed essentially upward and downward perpendicularly to the main deployment direction. In this case, the main deployment direction of the airbag is directed toward a vehicle occupant. The main inflow direction of the gas filling the airbag is to run essentially upwards and downwards transversely to this main deployment direction, in order to ensure that the airbag covers a large area as quickly as possible, so as to protect small and large vehicle occupants equally well. This is achieved in that, when the inner bag is in the filled state, the overflow orifices are directed essentially upward and downward, with the result that the airbag is preferably deployed first in this direction. Moreover, the gas is not introduced into the airbag directly in the main deployment direction, with the result that it is possible to prevent the front surface of the airbag, said front surface facing the vehicle occupant, from being moved with great force and with high velocity in the direction of the vehicle occupant. This minimizes the risk of injury to the vehicle occupant, should he prematurely come into contact with the airbag during its deployment operation, for example if he is too near the airbag ("out-of-position" situation). When the airbag is being filled with gas, the inner bag is firstly fully deployed and then the gas is conveyed further into the actual airbag via the overflow orifices.

Advantageously, the inner bag consists of two parts which are connected to one another in their circumferential regions, with the exception of the region of the gas inlet orifice. This makes it possible to manufacture the inner bag cost-effectively, since the two parts, which preferably have an identical outer contour, merely have to be laid flat one on the other and can then be connected to one another along their outer free edges. In this case, once again, only a two-dimensional connecting operation is necessary, with the result that production can be simplified and the production costs reduced.

Also preferably, the inner bag is in each case produced in one piece with a back part of the airbag. An additional connecting operation for connecting the back part to the parts of the inner bag may thereby be dispensed with. Sufficient reinforcement of the back part in the region of the gas inlet orifice by means of the inner bag can nevertheless be achieved, since the parts of the inner bag are folded round at the edge of the gas inlet orifice of the back parts, so as to extend inward into the airbag and thus overlap the back part or come to lie on the latter in the region of the gas inlet orifice. This ensures that the back part is of double-layer design in the region of the gas inlet orifice, so that the fastenings at a gas generator or gas generator carrier, which are arranged in this region, can be prevented from being torn out. In addition, the inner bag thereby serves as heat protection for the outer airbag.

The front part, the back parts and, if appropriate, the parts of the inner bag are preferably fabric pieces which are preferably stitched and/or adhesively bonded and/or heat-sealed to one another. A fabric, while having low weight, offers sufficient strength for the airbag. In addition, the fabric may be coated, in order to ensure sufficient heat protection or sufficient leaktightness. An extremely firm connection of the individual structural parts to one another can be achieved by stitching. High leaktightness of the connection can additionally be produced by adhesive bonding or heat sealing, and, at the same time, the connection can be made extremely cost-effectively.

The front part and the back parts are preferably produced in one piece. This makes it possible to manufacture the entire airbag from only one material portion which is appropriately cut to size. The number of connecting operations required may thereby be reduced. The back parts and the front part are simply pleated appropriately, so that they come to lie flat one on the other, so as then to be connected, as described above. In this case, only two-dimensional connecting operations are still necessary, so that the one-piece design does not make it more difficult to connect the individual parts.

Preferably, the front part is designed to be mirror-symmetric in relation to a longitudinal and/or transverse axis. In this case, the first portions of the two back parts are designed correspondingly, so that they are jointly congruent with the front part. A symmetric airbag, that is to say an airbag with a symmetric impact surface, is thereby formed.

Beneficially, the two back parts are designed to be mirror-symmetric to one another and the gas inlet orifice is arranged in the middle of the surface formed by the first portions of the back parts. A symmetric airbag is thereby provided, of which the fastening and gas inlet orifice are arranged essentially in the middle of the rear side, that is to say that side of the airbag which faces away from a vehicle occupant.

Alternatively, the first portion of one back part may be larger than the first portion of the second back part and the gas inlet orifice may be arranged outside the middle of the surface formed by the first portions of the back part. An asymmetric airbag is thereby formed, of which the fastening and gas inlet orifice are not arranged in the middle of the rear side. Thus, for example when arranged in an instrument panel, the airbag can extend more into the region of a vehicle occupant's head or foot, in order to ensure improved protection there. In this embodiment in which the first portions of the back parts are of different size, however, the two first portions of the back parts continue jointly to have a surface which corresponds to the surface of the front part. According to the invention, this simple change in the symmetric or asymmetric arrangement of the airbag as regards its fastening and the gas inlet orifice is achieved solely by means of different designs of the two back parts of the airbag, all the other parts of the airbag remaining unchanged. This results, along with simple manufacture, in a large number of variation possibilities for the airbag, thus allowing optimum adaptation to different vehicles and installation locations or installation situations.

In a further possible embodiment, the front part has an asymmetric design. In this case, once again, the first portions of the two back parts are designed correspondingly, so that they are jointly congruent with the front part. In this way, an altogether asymmetric airbag may be formed, which, for example, offers a more triangular front surface or impact surface. Thus, the design of the airbag may be adapted exactly to the respective installation location, in order to afford optimum potential for protection. At the same time, the gas inlet orifice may be arranged in the middle of the asymmetric airbag or in the middle of its rear side or else, as described above, may be arranged so as to be offset relative to the middle as a result of a variation in the size of the two first portions of the back parts. The basic makeup comprising two back parts and a front part, easy production making this makeup necessary, remains essentially unchanged in all these adaptations.

The portion in which the connection of the second portions of the back parts is interrupted is preferably arranged outside a center axis of the airbag. As a result, the airbag may be designed asymmetrically with respect to the gas inlet orifice which is formed by the interruption, the gas inlet orifice being displaced out of the middle of the seam along the latter between the two second portions of the back parts. In combination with the above-described variation in the sizes of the first portions of the two back parts, the gas inlet orifice may thereby be produced very easily at virtually any desired point on the rear side of the airbag.

The invention is described below by way of example with reference to the accompanying drawings in which:
- Figure 1: shows a top view of a back part and a first side part of the inner bag of the airbag according to the invention,
- Figure 2: shows a top view of a back part with a stitched-on first side part of an inner bag,
- Figure 3: shows a top view of the front portion of the airbag according to the invention,
- Figure 4: shows a sectional view of the airbag along the line A-A in Figure 3,
- Figure 5: shows a sectional view of the airbag, similar to Figure 4, after the airbag has been turned inside out,
- Figure 6: shows a diagrammatic top view of the airbag during filling, and
- Figure 7: shows a diagrammatic, partially sectional side view of the airbag during filling.

The method according to the invention is described below in individual steps by means of the accompanying drawings and with reference to an exemplary embodiment of the airbag according to the invention.

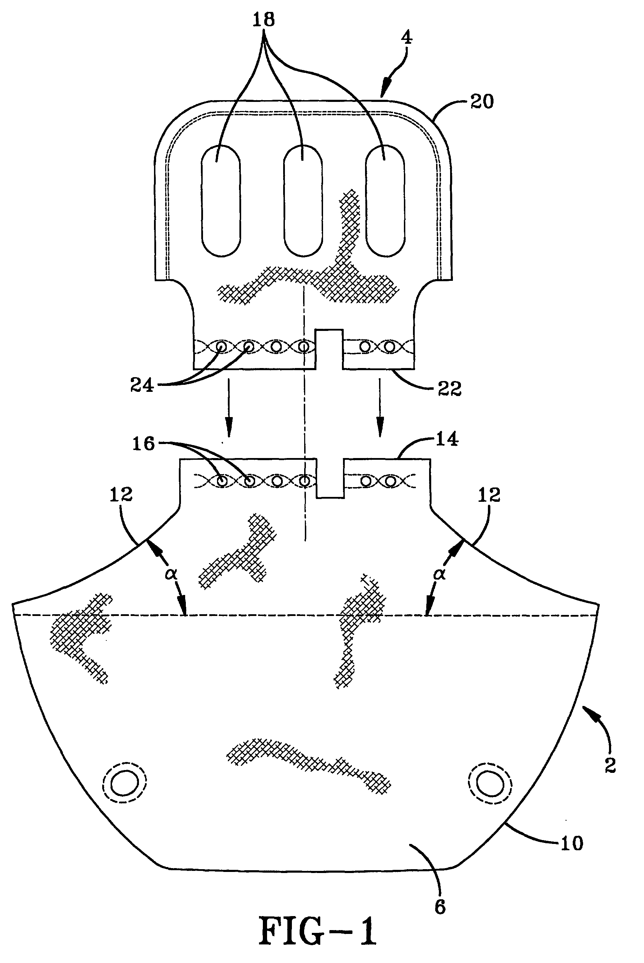

Figure 1 shows a top view of a back part 2 of the airbag and a side part 4 of the inner bag prior to their connection. The back part 2 has a first portion 6 and a second portion 8. The first portion 6 is subsequently connected along the free edge to the front part of the airbag, while the second portion 8 of the back part 2 is subsequently connected along its free edges 12 to the second portion of the other back part. The back part is not subsequently connected to the second back part along the free edge 14, in order to form a gas inlet orifice. Fastening orifices 16 are formed in parallel with the free edge 14 and subsequently serve for fastening the airbag to a gas generator or a gas generator carrier. Seams, running round the orifices 16 and to be made later, are shown, these being indicated by dashed lines, said seams serving for reinforcing the orifices 16 and fixing the side part 4 to the back part 2. By means of different inclinations of the edges 12, that is to say by increasing or reducing the angles a, the depth of the subsequent airbag can be changed very easily, without other components having to be changed. If the width of the back part 2 along the dashed transitional line from the first portion 6 to the second portion 8 remains the same and the length of the edge 14 defining the gas inlet orifice is constant, a change in the angle a brings about a change in the distance of the edge 14 from the first portion 6 and therefore a change in the length of the second portion 8 of the back part 2.

The side part 4 of the inner bag to be formed has three overflow orifices 18 which subsequently allow the gas to overflow from the inner bag into the actual airbag. The side part 4 of the inner bag is subsequently connected to a second, essentially identically designed side part 4 along the U-shaped free edge 20.

However, as the first production step after the parts have been cut to size, the side part 4 of the inner bag is first connected to the second portion 8 of the back part 2 along the free edge 22 of the side part 4. For this purpose, as indicated by the arrow in Figure 1, the side part 4, swung round, is laid onto the back part 2. The edge 22 then comes into congruence with the edge 14. Orifices 24 are likewise formed, parallel to the edge 22 of the side part 4, said orifices being congruent with the orifices 16 and serving, jointly with these, for fastening the airbag to a gas generator carrier. The side part 4 of the inner bag consequently then serves at the same time for reinforcing the fastening of the back part 2 to a gas generator carrier, so that the forces occurring during deployment can be transmitted more reliably.

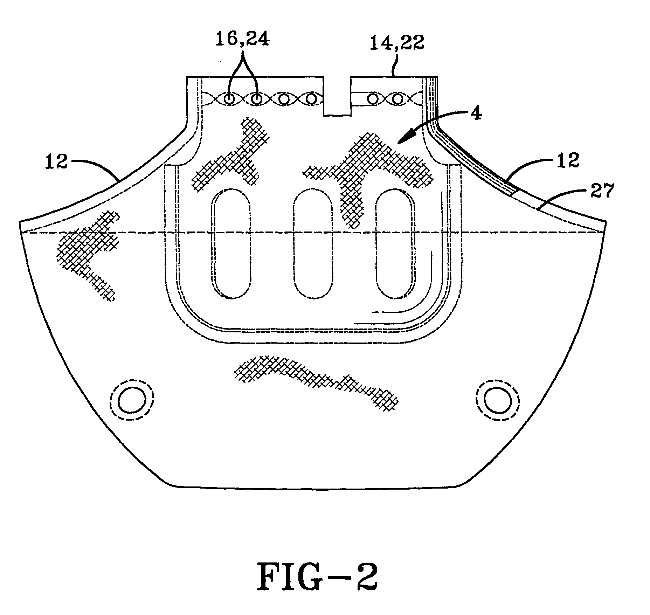

Figure 2 shows a top view according to Figure 1 of the back part 2, onto which the side part 4 of the inner bag is laid, so that the free edge 14 of the back part 2 comes into congruence with the edge 22 of the side part 4. The orifices 16 and 24 likewise lie congruently one above the other. The two parts 2, 4 are connected to one another by means of the seams 26 which run round the orifices 16, 24 and therefore at the same time reinforce these. This stitching operation can be carried out very simply, because it can take place merely two-dimensionally in one plane.

After the side parts 4 have been connected to the respective back part 2, in the next step the two back parts are stitched along the edges 12 shown in Figure 2, the two back parts being laid flat one on the other in such a way that the two side parts 4 of the inner bag lie on the two opposite outer faces of the back parts 2 lying one on the other. These seams, too, are only two-dimensional, thus making very simple stitching possible.

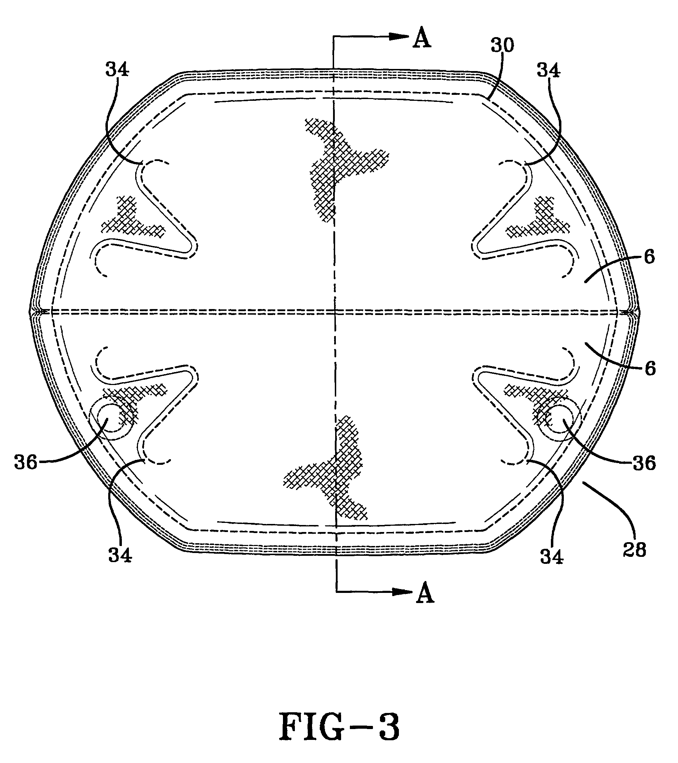

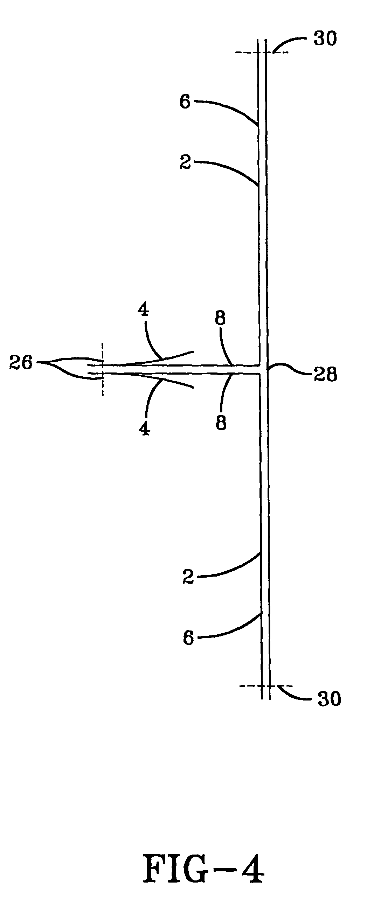

Next, the two back parts 2 are stitched to the front part 28, as shown in Figures 3 and 4. Figure 3 shows a top view of the front part 28 of the airbag. Dashed lines illustrate the two first portions 6 of the back part 2 which have been swung apart in such a way that their first portions 6 form a plane surface. Thus, when laid one on the other, the first portions 6 of the back parts 2 correspond exactly to the surface of the front part 28. The swung-out back parts 2 and the front part 28 are laid congruently one above the other (see Figure 4). The first portions 6 of the back parts 2 are then connected to the front part 28 along their outer circumference via the seams 30 illustrated by dashed lines in Figure 3, and, once again, this seam is only two-dimensional and can therefore be made very simply. The dashed lines 32 indicate the transition of the first portions 6 into the second portions 8 of the back parts 2. In addition to the seams 30, the front part 28 and the first portions 6 of the back parts 2 may be connected via tear-open seams 34 which tear open in a controlled manner when the airbag is filled with gas and which thus control a focused deployment of the airbag. In addition, outflow orifices 36 are provided in a first portion 6 of a back part 2 in Figure 3, said outflow orifices subsequently allowing the gas to escape from the airbag. The outflow orifices 36 are surrounded in a known way by tear-open seams 34 which allow a controlled opening of the outflow orifices 36 in a predetermined state of deployment of the airbag.

Figure 4 shows a sectional view along the line A-A in Figure 3 after the back parts 2 have been connected to the front part 28. The front part 28, on which the first portions 6 of the back parts 2 lie in parallel and congruently, is shown at the bottom. The two parts 6, 28 are connected to one another via the circumferential seam 30. The second portions 8 of the back parts 2 extend away from the front part 28 essentially transversely to the latter. The side parts 4 for the inner bag to be subsequently produced are fastened to the free edge 14 of the second portions 8 of the back parts 2. As may be seen in Figure 4, the circumferential seam 30, which connects the front part 28 and the back parts 2 to one another, is a two-dimensional seam which can be produced in an extremely simple way simply by running a stitching device down in one plane.

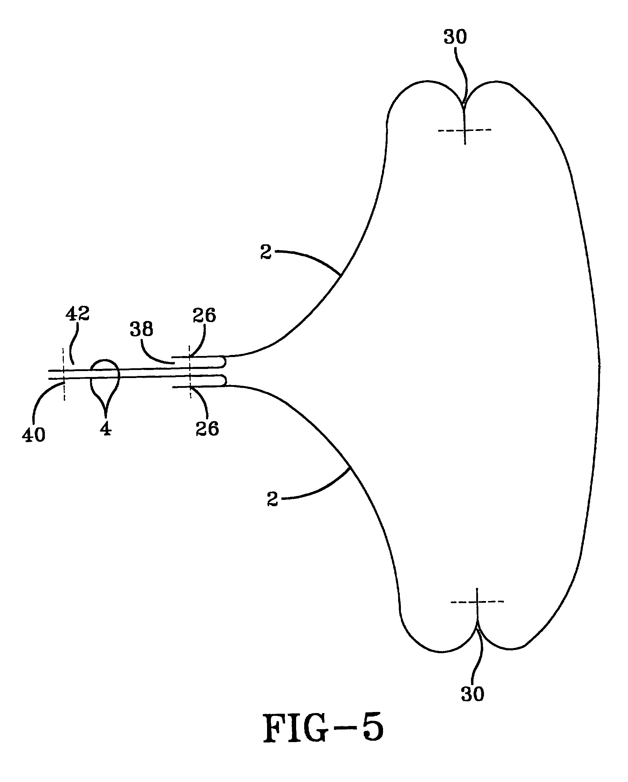

After the back parts 2 have been stitched to the front part 28, the entire airbag then produced is turned inside out, that is to say "wrong side out", so that the state illustrated in Figure 5 is assumed. In this state, the seams 30 and 27 (see Figure 2) are arranged inside the airbag, thus ruling out possible injury to a vehicle occupant by the seams. The two side parts 4 are then drawn out of the interior of the airbag through the gas inlet orifice 38, so that they come to lie one on the other in parallel and congruently, as shown in Figure 5, so that they can then be connected to one another along their outer edge 20 (see Figure 1) by means of a seam 40. Subsequently, the inner bag 42 stitched in this way, which consists of the two side parts 4 stitched at their circumference, is pushed into the interior of the airbag again.

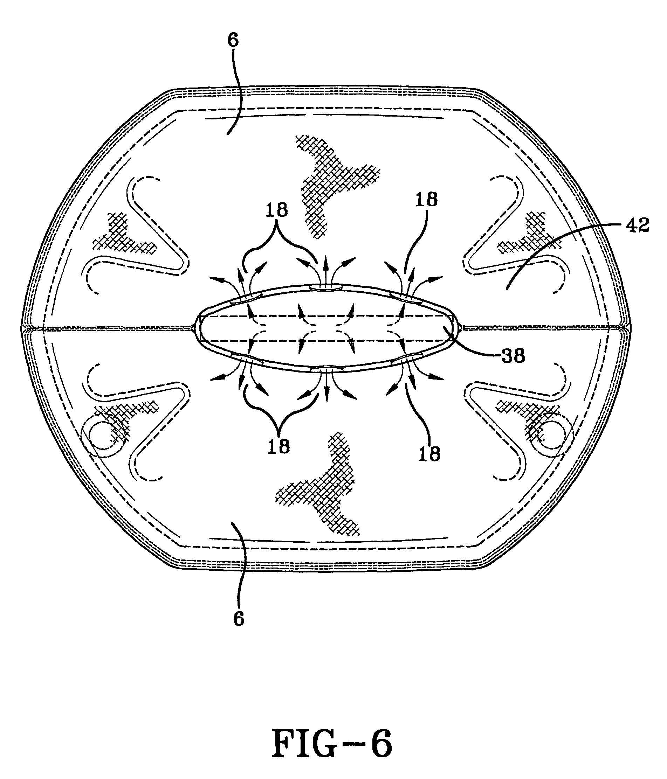

Figure 6 shows a diagrammatic top view of the finished airbag, illustrating the inflow of the gas during filling. As illustrated by the dashed arrows, the gas first flows out of the gas inlet orifice 38, illustrated by dashed lines, into the inner bag 42 which is thus first inflated. As indicated by the arrows, the gas flows out of the inner bag 42 through the overflow orifices 18 into the interior of the airbag. In this case, the overflow orifices 18 are arranged in such a way that the gas flows into the airbag essentially downward and upward, but essentially not in the lateral direction or in the depth direction toward a vehicle occupant. This ensures that the airbag is first deployed upward and downward, so that full protection is first achieved there and both large and small vehicle occupants can be protected safely.

It can likewise be seen clearly in Figure 6 that the position of the gas inlet orifice 38 can be shifted, that is to say displaced upward and downward in the drawing, by designing the first portions 6 of the back parts 2 in a different size.

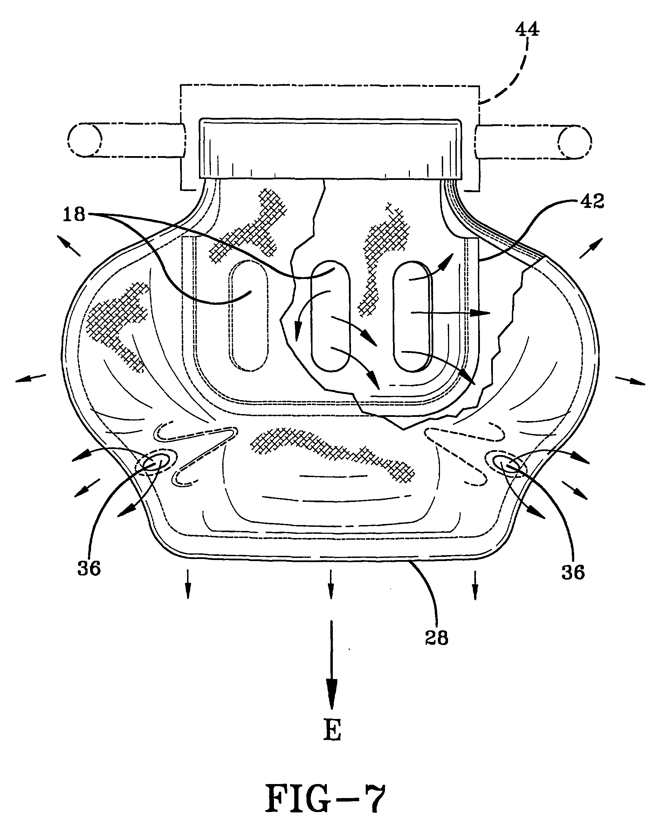

Figure 7, then, shows a partially sectional diagrammatic side view of the airbag illustrated in Figure 6, during filling. It can be seen particularly clearly, here, that the gas essentially does not flow in the depth direction or main deployment direction E toward the vehicle occupant out of the inner bag 42 through the overflow orifices 18 into the airbag. A high momentum of the front part 28 in the direction E, that is to say in the direction of a vehicle occupant, is thereby avoided. Thus, particularly in so-called "out-of-position" situations, in which a vehicle occupant is not in a predetermined position, the risk of injury by the airbag being deployed with great force and rapidly can be reduced. The high pressures and forces occurring when the airbag begins to be inflated are transmitted essentially via the inner bag 42 to the gas generator housing 44, to which the airbag is fastened. Consequently, lower forces act in the actual inner space of the airbag, and the airbag, consisting of the back parts 2 and front part 28, is subjected to a less pronounced load. For this reason, the back part 2 and the front part 28 may be manufactured from lighter material having a lower load-bearing capacity, as a result of which a weight reduction can be achieved. This leads, inter alia, to a more rapid deployment of the airbag 28 on account of its lower mass inertia and, because of the lighter fabric, also to less risk of injury to vehicle occupants. Moreover, Figure 7 illustrates the outflow orifices 36, through which the gas can escape out of the airbag again in a known way, particularly during the impact of a vehicle occupant on the airbag, in order to achieve better damping.

### List of reference numerals:

- 2: Back part
- 4: Side part of the inner bag
- 6: First portion of the back part
- 8: Second portion of the back part
- 10: Outer edge
- 12: Outer edge
- 14: Outer edge
- 16: Orifices
- 18: Overflow orifices
- 20: Outer edge
- 22: Outer edge
- 24: Orifice
- 26: Seam
- 27: Seam
- 28: Front part
- 30: Seam
- 32: Transition
- 34: Tear-open seam
- 36: Outflow orifice
- 38: Gas inlet orifice
- 40: Seam
- 42: Inner bag
- 44: Gas generator housing
- E: Main deployment direction
- α: Angle

## Claims

1. A method for producing an airbag for an airbag module, with the following steps:
provision of at least two back parts (2) and a front part (28), the back parts (2) each having a first (6) and a second (8) portion and the first portions (6) of the back parts (2) together corresponding to the surface and contour of the front part (28),
laying of at least the second portions (8) of the back parts (2) congruently one on the other,
connection of the second portions (8) of the back parts (2) in the region of their free circumference (12), the connection remaining interrupted at least in one portion (14), in order to form a gas inlet orifice,
spreading out of the first portions (6) of the back parts (2) and laying of the first portions (6) of the back parts (2) and of the front part (28) congruently one on the other,
connection of the front part (28) to the first portions (6) of the back parts (2) at least along the outer circumference (30) of the front part, and turning of the airbag inside out.

2. The method as claimed in claim 1, for producing an inner bag (42), furthermore comprising the following steps:
formation of a third portion (4) on each back part (2) prior to the connection of the back parts (2), which third portion in each case, starting from the circumferential region of the second portion (8) in which the gas inlet orifice is formed, extends parallel to the first (6) and second (8) portion, the two third portions (4) of the back parts (2) having at least the same outer contour and at least one overflow orifice (18) being provided in at least one of the third portions (4),
arrangement of the back parts (2) during the connection of the second portions (8), in such a way that the third portions (4) lie on opposite outer surfaces of the second portions (8),
drawing of the third portions (4) out of the airbag through the gas inlet orifice (38) after the airbag has been turned inside out,
laying of the two third portions (4) of the back parts (2) congruently one on the other and connection of the third portions (4) along their outer free edges (20), and
pushing of the connected third portions (4) of the back parts (2) into the interior of the airbag, in order to form the inner bag (42).

3. The method as claimed in claim 2, wherein the third portions (4) of the back parts (2) are manufactured as separate parts and are connected to the second portion (8) of the corresponding back part (2) prior to the connection of the second portions (8) of the two back parts (2) or the first (6), second (8) and third (4) portion of each back part (2) are produced in one piece.

4. The method as claimed in one of the preceding claims, wherein a predetermined depth of the airbag is set by adapting the length of the second portions (8) of the back parts (2) in the direction from the respective first portion (8) to the region (14) forming the gas inlet orifice.

5. An airbag for an airbag module, which is formed at least from a front part (28) facing a vehicle occupant and from two back parts (2) facing away from the vehicle occupant,
the two back parts (2) together having a larger surface than the front part (28) and the back parts (2) each having a first portion (6) which is dimensioned in such a way that the two first portions (6) of the back parts (2) jointly correspond to the front part (28) in terms of shape and size,
the two back parts (2) are connected along the free edges (10) of their first portions (6) to the front part along the outer circumference (30) of the latter, and
the back parts (2) have second portions (8) which extend essentially transversely to the front part (28) and which are connected to one another along their outer edges (12), the connection of the second portions (8) of the back parts (2) being interrupted at least in one portion (14), in order to form a gas inlet orifice (38).

6. The airbag as claimed in claim 5, wherein an additional inner bag (42) is provided, which preferably has a smaller volume than the airbag and is arranged inside the airbag and has a gas inlet orifice and at least one overflow orifice (18) which connects the interior of the inner bag (42) to the inner space of the airbag and, in the edge region of the gas inlet orifice of the inner bag (42), is connected, at least in portions, to the edge region of the gas inlet orifice (38) of the airbag.

7. The airbag as claimed in claim 6, wherein the inner bag (42) consists of two parts (4) which are connected to one another in their circumferential regions (20), with the exception of the region (22) of the gas inlet orifice and are preferably in each case produced in one piece with a back part (2) of the airbag.

8. The airbag as claimed in one of claims 5 to 7, wherein the front part (28) is designed to be mirror-symmetric in relation to a longitudinal and/or transverse axis and preferably
the two back parts (2) are designed to be mirror-symmetric to one another and the gas inlet orifice (38) is arranged in the middle of the surface formed by the first portions (6) of the back parts.

9. The airbag as claimed in one of claims 5 to 7, wherein the first portion (6) of one back part (2) is larger than the first portion (6) of the second back part (2) and the gas inlet orifice (38) is arranged outside the middle of the surface formed by the first portions (6) of the back parts (2).

10. The airbag as claimed in one of claims 5 to 7 or 9, wherein the front part (28) has an asymmetric design.

## Patentansprüche

1. Verfahren zur Herstellung eines Airbags bzw. Luftsackes für ein Airbagmodul mit den folgenden Schritten:
Bereitstellen von wenigstens zwei hinteren bzw. rückwärtigen Teilen (2) und einem vorderen Teil (28), wobei die hinteren Teile bzw. Rückteile (2) jeweils einen ersten (6) und einen zweiten (8) Abschnitt bzw. Bereich aufweisen und die ersten Abschnitte (6) der hinteren Teile (2) gemeinsam der Fläche und Kontur des vorderen Teils bzw. Frontteils (28) entsprechen,
Legen von wenigstens den zweiten Abschnitten (8) der hinteren Teile (2) kongruent einen über den anderen,
Verbinden der zweiten Abschnitte (8) der hinteren Teile (2) in dem Bereich ihres freien Umfangs (12), wobei die Verbindung unterbrochen an wenigstens einem Abschnitt (14) verbleibt, um eine Gaseinlaßöffnung auszubilden,
Ausbreiten der ersten Abschnitte (6) der hinteren Teile (2) und Legen der ersten Abschnitte (6) der hinteren Teile (2) und des vorderen Teils (28) kongruent einen über den anderen,
Verbinden des vorderen Teils (28) mit den ersten Abschnitten (6) der hinteren Teile (2) wenigstens entlang des äußeren Umfangs (30) des vorderen Teils und Drehen bzw. Wenden des Airbags mit der Innenseite nach außen.

2. Verfahren nach Anspruch 1 zur Erzeugung eines inneren Beutels bzw. Innensackes (42), weiters umfassend die folgenden Schritte:
Ausbilden eines dritten Abschnitts (4) an jedem hinteren Teil (2) vor dem Verbinden der hinteren Teile (2), wobei sich der dritte Abschnitt in jedem Fall, ausgehend von dem Umfangsbereich des zweiten Abschnitts (8), in welchem die Gaseinlaßöffnung ausgebildet wird, parallel zu dem ersten (6) und dem zweiten (8) Abschnitt erstreckt, wobei die zwei dritten Abschnitte (4) der hinteren Teile (2) wenigstens dieselbe Außenkontur aufweisen und wenigstens eine Überströmöffnung (18) in wenigstens einem der dritten Abschnitte (4) vorgesehen ist,
Anordnen der hinteren Teile (2) während der Verbindung der zweiten Abschnitte (8) in einer derartigen Weise, daß die dritten Abschnitte (4) an gegenüberliegenden, äußeren Oberflächen der zweiten Abschnitte (8) liegen,
Ziehen der dritten Abschnitte (4) aus dem Airbag durch die Gaseinlaßöffnung (38), nachdem der Airbag mit der Innenseite nach außen gewendet wurde,
Legen der zwei dritten Abschnitte (4) der hinteren Teile (2) kongruent einen über den anderen und Verbinden der dritten Abschnitte (4) entlang ihrer äußeren, freien Kanten bzw. Ränder (20), und
Drücken der verbundenen, dritten Abschnitte (4) der hinteren Teile (2) in das Innere des Airbags, um den inneren Beutel (42) auszubilden.

3. Verfahren nach Anspruch 2, worin die dritten Abschnitte (4) der hinteren Teile (2) als getrennte Teile hergestellt werden und mit dem zweiten Abschnitt (8) des entsprechenden hinteren Teils (2) vor dem Verbinden der zweiten Abschnitte (8) der zwei hinteren Teile (2) verbunden werden oder der erste (6), zweite (8) und dritte (4) Abschnitt von jedem hinteren Teil (2) in einem Stück bzw. einstückig hergestellt werden.

4. Verfahren nach einem der vorhergehenden Ansprüche, worin eine vorbestimmte Tiefe des Airbags durch Adaptieren der Länge der zweiten Abschnitte (8) der hinteren Teile (2) in der Richtung von dem entsprechenden ersten Abschnitt (8) zu dem Bereich (14) eingestellt wird, welcher die Gaseinlaßöffnung ausbildet.

5. Airbag für ein Airbagmodul, welcher aus wenigstens einem vorderen Teil (28), welcher zu einem Fahrzeuginsasse gerichtet ist, und zwei hinteren Teilen (2) gebildet ist, welche von dem Fahrzeuginsassen weg gerichtet sind,
wobei die zwei hinteren Teile (2) gemeinsam eine größere Oberfläche als der vordere Teil (28) aufweisen und die hinteren Teile (2) jeweils einen ersten Abschnitt bzw. Bereich (6) aufweisen, welcher derart dimensioniert ist, daß die zwei ersten Abschnitte (6) der hinteren Teile (2) gemeinsam dem vorderen Abschnitt (28) im Hinblick auf Form und Größe entsprechen,
die zwei hinteren Teile (2) entlang der freien Kanten bzw. Ränder (10) ihrer ersten Abschnitte (6) mit dem vorderen Teil entlang des äußeren Umfangs (30) des letzteren verbunden sind, und
die hinteren Teile (2) zweite Abschnitte bzw. Bereiche (8) aufweisen, welche sich im wesentlichen quer zu dem vorderen Teil (28) erstrecken und welche miteinander entlang ihrer äußeren Ränder bzw. Kanten (12) verbunden sind, wobei die Verbindung der zweiten Abschnitte (8) der hinteren Teile (2) in wenigstens einem Abschnitt (14) unterbrochen ist, um eine Gaseinlaßöffnung (38) auszubilden.

6. Airbag nach Anspruch 5, worin ein zusätzlicher, innerer Beutel (42) vorgesehen ist, welcher vorzugsweise ein geringeres Volumen als der Airbag aufweist und im Inneren des Airbags angeordnet ist und eine Gaseinlaßöffnung und wenigstens eine Überströmöffnung (18) aufweist, welche das Innere des inneren Beutels (42) mit dem Innenraum des Airbags verbindet und in dem Randbereich der Gaseinlaßöffnung des inneren Beutels (42) wenigstens in Abschnitten mit dem Randbereich der Gaseinlaßöffnung (38) des Airbags verbunden ist.

7. Airbag nach Anspruch 6, worin der innere Beutel (42) aus zwei Teilen (4) besteht, welche miteinander in ihren Umfangsbereichen (20) mit Ausnahme des Bereichs (22) der Gaseinlaßöffnung verbunden sind und vorzugsweise in jedem Fall einstückig mit einem hinteren Teil (2) des Airbags erzeugt sind.

8. Airbag nach einem der Ansprüche 5 bis 7, worin der vordere Teil (28) spiegelsymmetrisch relativ zu einer Längs- und/oder Querachse ausgebildet ist und vorzugsweise
die zwei hinteren Teile (2) ausgebildet sind, um spiegelsymmetrisch zueinander zu sein, und die Gaseinlaßöffnung (38) in der Mitte der Oberfläche angeordnet ist, welche durch die ersten Abschnitte (6) der hinteren Teile (2) gebildet ist.

9. Airbag nach einem der Ansprüche 5 bis 7, worin der erste Abschnitt (6) eines hinteren Teils (2) größer ist als der erste Abschnitt (6) des zweiten hinteren Teils (2) und die Gaseinlaßöffnung (38) außerhalb der Mitte der Oberfläche angeordnet ist, welche durch die ersten Abschnitte (6) der hinteren Teile (2) gebildet ist.

10. Airbag nach einem der Ansprüche 5 bis 7 oder 9, worin der vordere Teil (28) ein asymmetrisches Design aufweist.

## Revendications

1. Procédé de production d'un coussin d'air pour un module de coussin d'air, comprenant les étapes ci-dessous:
fourniture d'au moins deux parties arrière (2) et d'une partie avant (28), les parties arrière (2) comportant chacune une première (6) et une deuxième (8) section, les premières sections (6) des parties arrière (2) correspondant ensemble à la surface et au contour de la partie avant (28),
superposition congruente d'au moins des deuxièmes sections (8) des parties arrière (2),
connexion des deuxièmes sections (8) des parties arrière (2) dans la région de leur circonférence libre (12), la connexion restant interrompue au niveau d'au moins une section (14) en vue de former un orifice d'admission de gaz,
étalement des premières sections (6) des parties arrière (2) et superposition congruente des premières sections (6) des parties arrière (2) et de la partie avant (28),
connexion de la partie avant (28) des premières sections (6) des parties arrière (2), au moins le long de la circonférence externe (30) de la partie avant et mise à l'envers du coussin d'air.

2. Procédé selon la revendication 1 servant à produire un coussin intérieur (42) comprenant en outre les étapes ci-dessous:
formation d'une troisième section (4) sur chaque partie arrière (2) avant de connecter les parties arrière (2), cette troisième section partant dans chaque cas de la région circonférentielle de la deuxième section (8), dans laquelle est agencé l'orifice d'admission de gaz, s'étendant parallèlement à la première (6) et à la deuxième (8) section, les deux troisièmes sections (4) des parties arrière (2) ayant au moins le même contour extérieur, et au moins un orifice de trop-plein (18) étant agencé dans au moins une des troisièmes sections (4),
agencement des parties arrière (2), au cours de la connexion des deuxièmes sections (8), de sorte que les troisièmes sections (4) se situent sur les surfaces externes opposées des deuxièmes sections (8),
sortie des troisièmes sections (4) du coussin d'air à travers l'orifice d'admission de gaz (38) après que le coussin d'air a été mis à l'envers,
superposition congruente des deux troisièmes sections (4) des parties arrière et connexion des troisièmes sections (4) le long de leurs bords externes libres (20), et
poussée des troisièmes sections connectées (4) des parties arrière (2) à l'intérieur du coussin d'air, pour former le coussin intérieur (42).

3. Procédé selon la revendication 2, dans lequel les troisièmes sections (4) des parties arrière (2) sont fabriquées sous forme de pièces séparées et sont connectées à la deuxième section (8) de la partie arrière correspondante (2) avant la connexion des deuxièmes sections (8) des deux parties arrière (2) ou les première (6), deuxième (8) et troisième (4) sections de chaque partie arrière (2) peuvent être produites en une seule pièce.

4. Procédé selon l'une quelconque des revendications précédentes, dans lequel une profondeur prédéterminée du coussin d'air est réglée par adaptation de la longueur des deuxièmes sections (8) aux parties arrière (2), dans la direction allant de la première section respective (8) vers la région (14) formant l'orifice d'admission de gaz.

5. Coussin d'air pour un module de coussin d'air, formé au moins à partir d'une partie avant (28) faisant face à un occupant du véhicule, et de deux parties arrière (2) orientées à l'écart de l'occupant du véhicule,
les deux parties arrière (2) ayant ensemble une surface supérieure à celle de la partie avant (28), les parties arrière (2) comportant chacune une première section (6), dimensionnée de sorte que les deux premières sections (6) des parties arrière (2) correspondent conjointement à la partie avant (28) en termes de forme et de taille,
les deux parties arrière (2) étant connectées le long des bords libres (10) de leurs premières sections (6) à la partie avant, le long de la circonférence externe (30) de celle-ci, et
les parties arrière (2) comportant des deuxièmes sections (8) s'étendant pour l'essentiel transversalement à la partie avant (28) et connectées le long de leurs bords externes (12), la connexion des deuxièmes sections (8) des parties arrière (2) étant interrompue au moins dans une section (14), pour former un orifice d'admission de gaz (38).

6. Cousin gonflable selon la revendication 5, comportant un coussin intérieur additionnel (42), ayant de préférence un volume inférieur à celui du coussin d'air, agencé à l'intérieur du coussin d'air et comportant un orifice d'admission de gaz et au moins un orifice de trop-plein (18), connectant l'intérieur du coussin intérieur (42) à l'espace interne du coussin d'air et étant connecté, dans la partie de bordure de l'orifice d'admission de gaz du coussin intérieur (42), au moins partiellement à la région de bordure de l'orifice d'admission de gaz (38) du coussin d'air.

7. Coussin d'air selon la revendication 6, dans lequel le coussin intérieur (42) comporte deux parties (4), connectées dans leurs régions circonférentielles (20), à l'exception de la région (22) de l'orifice d'admission de gaz, et produites de préférence dans chaque cas en une seule pièce avec une partie arrière (2) du coussin d'air.

8. Coussin d'air selon l'une des revendications 5 à 7, dans lequel la partie avant (28) est conçue de sorte à être symétrique à un axe longitudinal et/ou transversal,
les deux parties arrière (2) étant de préférence conçues de sorte à être symétriques l'une à l'autre, l'orifice d'admission de gaz (38) étant agencé au milieu de la surface formée par les premières sections (6) des parties arrière.

9. Coussin d'air selon l'une des revendications 5 à 7, dans lequel la première section (6) d'une partie arrière (2) est plus grande que la première section (6) de la deuxième partie arrière (2), l'orifice d'admission de gaz (38) étant agencé à l'extérieur du milieu de la surface formée par les premières sections (6) des parties arrière (2).

10. Coussin d'air selon l'une des revendications 5 à 7 ou 9, dans lequel la partie avant (28) a une conception asymétrique.
